(19) Europäisches Patentamt / European Patent Office / Office européen des brevets

(11) **EP 2 894 458 B1**

(12) **EUROPEAN PATENT SPECIFICATION**

(45) Date of publication and mention
of the grant of the patent:
**24.06.2020 Bulletin 2020/26**

(51) Int Cl.:
*G01N 15/08* (2006.01)    *H01M 4/02* (2006.01)

(21) Application number: **15150762.1**

(22) Date of filing: **12.01.2015**

(54) **Degree-of-dispersion inspecting apparatus for particles of electricity storage material in electricity storage device**

Vorrichtung zur Inspektion des Dispersionsgrades für Teilchen von Elektrizitätsspeichermaterial in einer Elektrizitätsspeichervorrichtung

Appareil d'inspection de degré de dispersion pour des particules de matériau de stockage d'électricité dans un dispositif de stockage d'électricité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2014 JP 2014004407**

(43) Date of publication of application:
**15.07.2015 Bulletin 2015/29**

(73) Proprietor: **JTEKT Corporation
Osaka-shi
Osaka 542-8502 (JP)**

(72) Inventors:
• **Nishi, Koji**
  **Chuo-ku, Osaka-shi, Osaka 542-8502 (JP)**
• **Matsuura, Takashi**
  **Chuo-ku, Osaka-shi, Osaka 542-8502 (JP)**
• **Komatsubara, Yukihiro**
  **Chuo-ku, Osaka-shi, Osaka 542-8502 (JP)**

(74) Representative: **TBK
Bavariaring 4-6
80336 München (DE)**

(56) References cited:
**US-A1- 2008 292 965**

• **HAMMING L M ET AL: "Effects of dispersion and interfacial modification on the macroscale properties of TiO2 polymer-matrix nanocomposites", COMPOSITES SCIENCE AND TECHNOLOGY, ELSEVIER, UK, vol. 69, no. 11-12, 1 September 2009 (2009-09-01), pages 1880-1886, XP026224315, ISSN: 0266-3538, DOI: 10.1016/J.COMPSCITECH.2009.04.005 [retrieved on 2009-04-16]**

## Description

BACKGROUND OF THE INVENTION

1. Field of the Invention

The invention relates to apparatuses for inspecting the degree of dispersion of particles of an electricity storage material in an electricity storage device.

2. Description of the Related Art

In recent years, lithium ion secondary batteries have been used as electricity storage devices for hybrid vehicles, electric vehicles, etc. Electrodes of the lithium ion secondary batteries are manufactured by first kneading powder of an active material etc. and a solution of a thickener to produce slurry of an active material (electricity storage material), and then applying the slurry of the active material to a base material such as aluminum foil and drying the slurry. Battery performance of the lithium ion secondary batteries is greatly affected by the degree of dispersion of particles of the active material in the electrodes. It is desired to quantify the degree of dispersion of particles in order to accurately evaluate the battery performance.

For example, JP 2925195 B2 describes an apparatus that quantifies the degree of dispersion of particles. This apparatus obtains the position of the center of gravity of each particle from an image in which particles are present, divides the image into a plurality of regions by line segments each connecting adjacent ones of the positions of the center of gravity, and quantifies the degree of dispersion of particles from the area of each region. JP H09-257686 A describes that void distribution is measured by obtaining the areas or perimeters of voids between particles from an image in which particles are present. JP 5271967 B2 describes that the degree of dispersion is obtained by dividing a mean deviation of the distances between the centers of gravity of voids by the mean of the distances between the centers of gravity of the voids. JP 2013-89491 A describes that battery performance can be improved when the difference between the volume of an active material and the volume of voids is equal to or larger than a prescribed value. US 2008/292965 A1 describes a method of measuring a surface pore area of a mixture layer formed by binding an electrode active material and resin particles with a binder. This method calculates a ratio of an area of black pixels to an area of the entire pixels of a gray-scale image which was binarized into black and white. L. M. HAMMING et al. correlate in Composites Science and Technology, Elsevier, UK, vol. 69, no. 11-12, pages 1880-1886, section 3.3 a dispersion of nanoparticles of $TiO_2$ polymer-matrix nano-composites to the glass transition temperature of the composites. For this purpose, centroids of agglomerates were determined in SEM images of microtomed surfaces of the composites, and a mean distance between the centroids of the agglomerates within each image was calculated for comparing different types of composites.

The apparatus described in JP 2925195 B2 is not applicable in the case where particles are in contact with each other or the case where particles vary in size, because this apparatus is based on the assumption that particles having a substantially uniform size are separated from each other. JP H09-257686 A, JP 5271967 B2, JP 2013-89491 A, and US 2008/292965 A1 do not specifically describe quantification of the degree of dispersion of particles.

SUMMARY OF THE INVENTION

It is one of objects of the invention to provide a degree-of-dispersion inspecting apparatus capable of quantifying the degree of dispersion even when particles of an electricity storage material in an electricity storage device are in contact with each other or vary in size.

According to an aspect of the invention, a degree-of-dispersion inspecting apparatus has the features set forth in claim 1. According to this aspect, attention is directed to the in-plane uniformity as a macroscopic value based on the ratio of the voids in the electricity storage material. This allows the degree of dispersion of the particles of the electricity storage material to be quantified even if the particles of the electricity storage material vary in size.

According to another aspect of the invention, a degree-of-dispersion inspecting apparatus has the features set forth in claim 2. According to this aspect, attention is directed to the void size uniformity as a microscopic value based on the values equivalent to the sizes of the voids in the electricity storage material. This allows the degree of dispersion of the particles of the electricity storage material to be quantified even if the particles of the electricity storage material are in contact with each other.

According to still another aspect of the invention, a degree-of-dispersion inspecting apparatus has the features set forth in claim 3. According to this aspect, attention is directed to the in-plane uniformity as a macroscopic value based on the ratio of the voids in the electricity storage material, and the void size uniformity as a microscopic value based on the values equivalent to the sizes of the voids in the electricity storage material. This allows the degree of dispersion of the particles of the electricity storage material to be accurately quantified even if the particles of the electricity storage material are in contact with each other or vary in size.

In the degree-of-dispersion inspecting apparatus according to the above aspects, the imaging device may obtain the image data by scanning in a prescribed direction, and the void size equivalent value computing device may obtain lengths of the voids between the particles in the binarized image data as the values equivalent to the sizes of the voids. This facilitates quantification of the degree of dispersion of the particles of the electricity storage material in efficient manner.

In the degree-of-dispersion inspecting apparatus according to the above aspects, the imaging device may obtain the image data by scanning in one direction. The lengths of the voids can therefore be accurately obtained, which can increase accuracy of the quantified degree of dispersion of the particles of the electricity storage material.

In the degree-of-dispersion inspecting apparatus according to the above aspects, the imaging device may obtain the image data by scanning in first direction and in second direction perpendicular to the first direction. The lengths of the voids can therefore be accurately obtained regardless of the shapes and directions of the voids, which can further increase accuracy of the quantified degree of dispersion of the particles of the electricity storage material.

The degree-of-dispersion inspecting apparatus according to the above aspects may further include: a storage device in which a correlation between the quantified degree of dispersion of the particles and performance of the electricity storage device is prestored; and a performance evaluating device that evaluates based on the correlation the performance of the electricity storage device from the quantified degree of dispersion of the particles obtained by the degree-of-dispersion quantifying device. The degree of dispersion of the particles of the electricity storage material is thus connected with evaluation of the performance of the electricity storage device. This facilitates improvement in performance and functions of electricity storage devices, and can reduce the fraction defective of electricity storage devices.

In the degree-of-dispersion inspecting apparatus according to the above aspects, the particles of the electricity storage material may be particles of an active material, and the imaging device may be a scanning electron microscope (SEM).

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic configuration diagram showing a degree-of-dispersion inspecting apparatus that inspects the degree of dispersion of particles of an electricity storage material in an electricity storage device according to an embodiment of the invention;
FIG. 2 is a flowchart showing processing in the degree-of-dispersion inspecting apparatus according to the embodiment of the invention;
FIG. 3 is a diagram showing an image of a coating film, which is obtained from image data;
FIG. 4 is a diagram showing an image of the coating film, which is obtained from binarized image data;

FIG. 5 is a diagram showing image regions into which the image of the coating film, which is obtained from the binarized image data, is divided;
FIG. 6 is a diagram showing a scanning direction in the binarized image data when obtaining values equivalent to the sizes of voids.
FIG. 7 is a diagram showing a frequency distribution of the values equivalent to the sizes of the voids in the binarized image data; and
FIG. 8 is a diagram showing a correlation between the quantified degree of dispersion of the particles and the rate of decrease in capacity of a lithium ion secondary battery.

DETAILED DESCRIPTION OF EMBODIMENTS

An embodiment of the invention will be described below with reference to the accompanying drawings. A degree-of-dispersion inspecting apparatus according to an embodiment of the invention is, e.g., an apparatus that inspects the degree of dispersion of particles of an electricity storage material in electrodes (positive and negative electrodes) of a lithium ion secondary battery as an electricity storage device. Electrodes of lithium ion secondary batteries are manufactured by applying slurry of an active material as an electricity storage material to a base material such as aluminum foil or copper foil and drying the slurry.

For positive electrodes, specific examples of the active material include lithium-nickel oxide etc. as an active material (solid component), N-methylpyrrolidone etc. as a solvent (liquid), acetylene black etc. as a conductive aid, and polyvinylidene fluoride etc. as a binder. For negative electrodes, specific examples of the active material include graphite etc. as an active material (solid component), water as a solvent (liquid), carboxymethyl cellulose etc. as a thickener, and SRB rubber, polyacrylic acid, etc. as a binder.

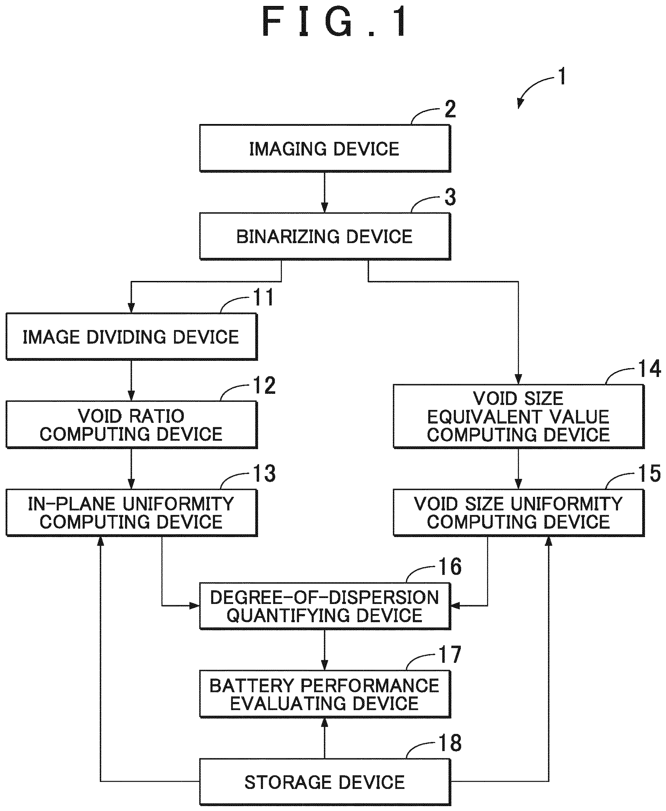

The configuration of the degree-of-dispersion inspecting apparatus according to the present embodiment will be described with reference to FIG. 1. A degree-of-dispersion inspecting apparatus 1 includes an imaging device 2, a binarizing device 3, an image dividing device 11, a void ratio computing device 12, an in-plane uniformity computing device 13, a void size equivalent value computing device 14, a void size uniformity computing device 15, a degree-of-dispersion quantifying device 16, a battery performance evaluating device 17, a storage device 18, etc.

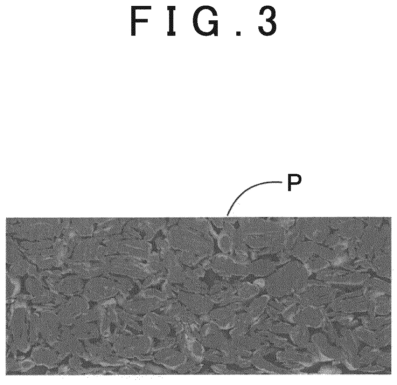

For example, a scanning electron microscope (SEM) etc. is used as the imaging device 2. In the present embodiment, the SEM irradiates and scans a coating film of the active material with an electron beam. The SEM sequentially shifts a linear scanning line of the electron beam to detect secondary electrons etc. discharged from the coating film, and obtains image data of the coating film from information on the coordinates irradiated with the electron beam and a detection signal of the secondary electrons etc. Examples of the electron beam scanning method include a method for scanning in one direction with an electron beam, a method for scanning in first direction and in second direction perpendicular to the first direction with an electron beam, etc. As shown in FIG. 3, an image P of a coating film, which is obtained from image data of the entire scanning region, is displayed on a display device of the imaging device 2.

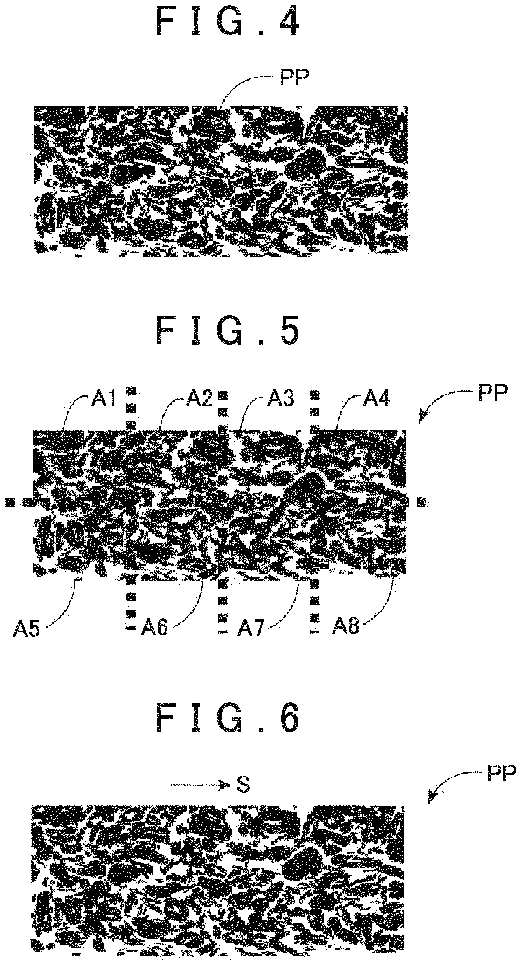

The binarizing device 3 performs binarization by dividing pixels of the image data of the entire scanning region, which is obtained by the imaging device 2, into black and white. The binarizing device 3 thus produces binarized image data. For example, as shown in FIG. 4, an image PP of the coating film, which is obtained from the binarized image data of the entire scanning region, is an image of 516 pixels by 1,276 pixels, and is formed by small black and white dots. Particles of the active material are represented in black, and voids are represented in white. The image dividing device 11 divides the binarized image data of the entire scanning region, which is produced by the binarizing device 3, into a plurality of image regions. For example, as shown in FIG. 5, the image PP of the coating film, which is obtained from the binarized image data of the entire scanning region, is divided into eight image regions A1 to A8.

The void ratio computing device 12 obtains the ratio of voids between particles in each of the image regions A1 to A8 obtained by the image dividing device 11. For example, the ratio of voids is the ratio of the area of the white parts in each image region A1 to A8 to the area of that image region A1 to A8. The area of each image region and the area of the white parts are obtained by the number of corresponding pixels. The in-plane uniformity computing device 13 obtains in-plane uniformity of the voids based on the ratios of voids in image regions A1 to A8, which is obtained by the void ratio computing device 12. As used herein, the term "in-plane uniformity" refers to variation in the ratio of voids among the plurality of image regions A1 to A8. A method for computing the in-plane uniformity will be described in detail later.

The void size equivalent value computing device 14 obtains values equivalent to the sizes of the voids between the particles in the binarized image data obtained by the binarizing device 3. For example, as shown in FIG. 6, the void size equivalent value computing device 14 obtains by the number of white pixels the lengths of the voids in the image PP of the coating film, which is obtained from the binarized image data of the entire scanning region, namely the lengths in the scanning direction of the white parts. Alternatively, the void size equivalent value computing device 14 obtains by the number of pixels the area of the voids in the image PP of the coating film, which is obtained from the binarized image data of the entire scanning region, namely the area of the white parts.

The void size uniformity computing device 15 obtains void size uniformity of the voids based on the lengths of the voids, which are obtained by the void size equivalent value computing device 14. As used herein, the term "void size uniformity" refers to variation in size among the voids in the binarized image data of the entire scanning region. A method for computing the void size uniformity will be described in detail later. The degree-of-dispersion quantifying device 16 quantifies the degree of dispersion of the particles based on the in-plane uniformity obtained by the in-plane uniformity computing device 13 and the void size uniformity obtained by the void size uniformity computing device 15. A method for computing the quantified degree of dispersion will be described in detail later.

The battery performance evaluating device 17 evaluates performance of the lithium ion secondary battery from the quantified degree of dispersion of the particles obtained in the degree-of-dispersion quantifying device 16, based on the correlation between the degree of dispersion of the particles of the active material in the electrodes of the lithium ion secondary battery, which has been obtained in advance, and the performance of the lithium ion secondary battery. A method for evaluating the performance will be described in detail later.

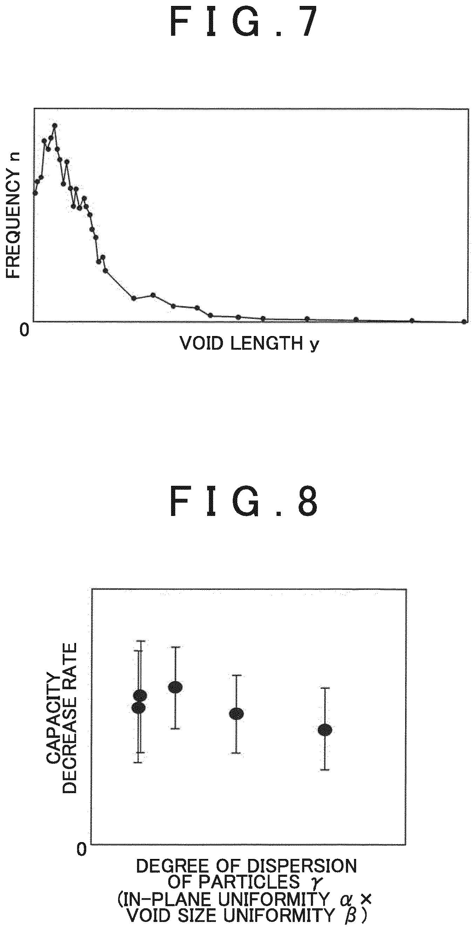

The storage device 18 has prestored therein expressions to be used in computation of the in-plane uniformity (expressions (1) to (3) described below), expressions to be used in computation of the void size uniformity (expressions (4) to (6) described below), an expression to be used in computation of the quantified degree of dispersion (expression (7) described below), and correlation data (see FIG. 8 etc.) between the degree of dispersion of the particles of the active material in the electrodes of the lithium ion secondary battery and the performance of the lithium ion secondary battery.

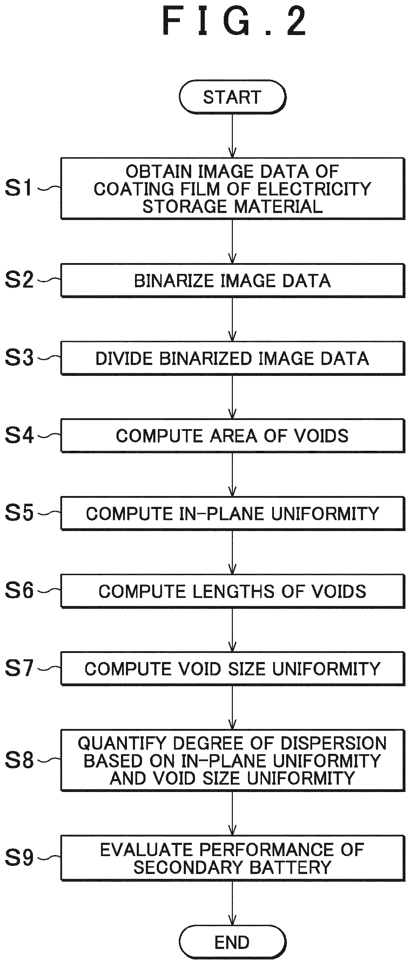

An inspection method that is used by the degree-of-dispersion inspecting apparatus 1 will be described below with reference to FIG. 2. First, as a preparatory step, a part of an electrode of a lithium ion secondary battery is cut out in the shape of a rectangular parallelepiped, and the surface of a coating film of an active material is polished with an argon ion beam. Next, as shown in FIG. 2, image data of the coating film of the active material is obtained (step S1). Specifically, a part of the electrode, which has the polished surface of the coating film, is placed in the imaging device 2, and such an image P of the coating film as shown in FIG. 3, which is obtained from the image data, is obtained.

Then, the image data is binarized (step S2 in FIG. 2), and the binarized image data is divided into a plurality of image regions (step S3). Specifically, the image dividing device 11 obtains such an image PP of the coating film as shown in FIG. 4, which is an image of 516 pixels by 1,276 pixels and is obtained from the black-and-white binarized image data (corresponding to step S2), and divides the image PP into a total of eight image regions A1 to A8 by equally dividing the image PP into four in the vertical direction and into two in the horizontal direction as shown in FIG. 5 (corresponding to step S3).

Thereafter, the area of voids in each image region will be obtained (step S4). Specifically, the void ratio computing device 12 obtains the number of pixels in the white parts in each image region A1 to A8 of 258 pixels by 319 pixels. Then, in-plane uniformity of the voids is obtained based on the area of the voids in each image region (step S5). Specifically, the in-plane uniformity computing device 13 obtains a void area ratio "xi" as a ratio of the area of the voids in each image region A1 to A8 to the area of that image region A1 to A8 (in this example, "i" is 1 to 8), and obtains an average value "ux" of the void area ratios "xi" in all of the image regions A1 to A8 by the following expression (1).

$$ux = \sum_{i=1}^{8} xi / 8 \qquad (1)$$

The in-plane uniformity computing device 13 obtains a standard deviation value "dx" of the void area ratios "xi" in all of the image regions A1 to A8 by the following expression (2).

$$dx = \sqrt{\left(\left(\sum_{i=1}^{8} (ux - xi)^2\right) / 8\right)} \qquad (2)$$

The in-plane uniformity computing device 13 obtains in-plane uniformity "$\alpha$" of the voids in the binarized image data by substituting the average "ux" and the standard deviation "dx" of the void area ratios "xi" in all of the image regions A1 to A8 for the following expression (3).

$$\alpha = ux/dx \qquad (3)$$

Then, the lengths of the voids in the binarized image data are obtained (step S6). Specifically, as shown in FIG. 6, the void size equivalent value computing device 14 obtains, by the number of pixels, the lengths in the scanning direction S of the white parts in the image PP of the coating film, the image PP which is obtained from the binarized image data. As shown in FIG. 7, a frequency distribution of the lengths of the voids in the image PP of the coating film, the image PP which is obtained from the binarized image data. The higher the degree of dispersion of the particles is, the higher the frequency of a specific length of the voids is.

Void size uniformity of the voids is obtained based on the lengths of the voids in the binarized image data (step S7). Specifically, the void size uniformity computing device 15 obtains an average value "uy" of the lengths of the voids by substituting the lengths "y" and frequencies "n" of all the voids for the following expression (4).

$$uy = \sum (y \times n) / \sum n \qquad (4)$$

The void size uniformity computing device 15 obtains a standard deviation "dy" of the lengths "y" of the voids by the following expression (5).

$$dy = \sqrt{\left(\left(\sum (uy - y)^2 \times n\right) / \sum n\right)} \qquad (5)$$

The void size uniformity computing device 15 obtains void size uniformity "$\beta$" by substituting the average "uy" and the standard deviation "dy" of the lengths of the voids for the following expression (6). The void size uniformity $\beta$ represents variation in size among the voids in the binarized image data.

$$\beta = (uy - dy)/uy \qquad (6)$$

Thereafter, as shown in FIG. 2, the degree of dispersion of the particles is quantified based on the in-plane uniformity and the void size uniformity (step S8). Specifically, the degree-of-dispersion quantifying device 16 obtains a value "$\gamma$" from the in-plane uniformity $\alpha$ and the void size uniformity $\beta$ ($\gamma = \alpha \times \beta$) as a quantified degree of dispersion of the particles, as given by the following expression (7).

$$\gamma = \alpha \times \beta \qquad (7)$$

Subsequently, performance of the lithium ion secondary battery is evaluated based on the value $\gamma$ of the quantified degree of dispersion of the particles (step S9), whereby all the processing is terminated. Specifically, the battery performance evaluating device 17 obtains the rate of decrease in capacity of the lithium ion secondary battery corresponding to the obtained value $\gamma$ of the quantified degree of dispersion of the particles, based on such a correlation between the value $\gamma$ of the degree of dispersion of the particles and the rate of decrease in capacity of the lithium ion secondary battery as shown in FIG. 8, and evaluates the performance of the lithium ion secondary battery. This correlation is prestored in the storage device 18.

The rate of decrease in capacity is represented by the number of times the lithium ion secondary battery has been charged and discharged until the time the charging capacity of the lithium ion secondary battery has decreased to, e.g., 60% from its initial charging capacity of 100% due to repeated charging and discharging. As shown in FIG. 8, the larger the value $\gamma$ of the degree of dispersion of the particles is, the lower the rate of decrease in capacity and the variation in the rate of decrease in capacity are. Accordingly, the larger the value $\gamma$ of the degree of dispersion of the particles is, the more satisfactory the battery performance is.

According to the degree-of-dispersion inspecting apparatus 1, attention is directed to the in-plane uniformity $\alpha$ as a macroscopic value based on the ratio of voids between the particles of the active material of the lithium ion secondary battery, and the void size uniformity $\beta$ as a microscopic value based on the values equivalent to the sizes of the voids in the active material. This allows the degree of dispersion of the particles of the active material to be accurately quantified even if the particles of the active material are in contact with each other or vary in size. Moreover, the degree of dispersion of the particles of the active material is connected with the evaluation of the performance of the lithium ion secondary battery. This facilitates improvement in performance and functions of lithium ion secondary batteries, and can reduce the fraction defective of lithium ion secondary batteries. Because the lengths of the voids as values equivalent to the sizes of the voids in the active material are obtained by scanning in one scanning direction S, the lengths of the voids can be accurately obtained, which can increase accuracy of the quantified degree of dispersion of the particles of the electricity storage material.

In the above embodiment, the degree of dispersion of the particles of the active material is accurately quantified by using both the in-plane uniformity $\alpha$ based on the ratio of voids in the active material of the lithium ion secondary battery and the void size uniformity $\beta$ based on the values equivalent to the sizes of the voids in the active material. In other embodiments, however, the degree of dispersion of the particles of the active material may be accurately quantified by using only one of the in-plane uniformity $\alpha$ or the void size uniformity $\beta$. In this case, the higher the in-plane uniformity $\alpha$ is, the higher the degree of dispersion of the particles of the active material is. In this case, the closer the void size uniformity $\beta$ is to 1, the higher the degree of dispersion of the particles of the active material is.

In the above embodiment, the lengths of the voids of the active material are obtained by scanning in one direction. However, the lengths of the voids of the active material may be obtained by scanning in two directions, namely first direction and in second direction perpendicular to the first direction. Therefore, the lengths of the voids can thus be accurately obtained regardless of the shapes and directions of the voids, which can further increase accuracy of the quantified degree of dispersion of the particles of the electricity storage material. The invention is not limited to the apparatus that inspects the degree of dispersion of the particles of the active material for the electrodes of the lithium ion secondary battery. The invention is also applicable to apparatuses that inspect the degree of dispersion of particles of any electricity storage material such as a material of a capacitor.

The void area ratio "xi" that is calculated by the in-plane uniformity computing device 13 may be the ratio of the area of each image region A1 to A8 to the area of voids in that image region A1 to A8. The ratio of voids between the particles in each image region A1 to A8 may be replaced with the ratio of the area of the black parts in each image region A1 to A8 to the area of that image region A1 to A8.

## Claims

1. A degree-of-dispersion inspecting apparatus (1) for inspecting a degree of dispersion of particles of an electricity storage material in an electricity storage device, comprising:

    an imaging device (2) that is configured to image a portion of the electricity storage device in which the particles of the electricity storage material are present, and obtain image data;
    a binarizing device (3) that is configured to binarize the image data by dividing pixels of the image data into black and white to produce binarized image data;
    an image dividing device (11) that is configured to divide the binarized image data into a plurality of image regions;
    a void ratio computing device (12) that is configured to obtain a ratio of voids between the particles in each of the plurality of image regions, said ratio of voids being the ratio of the area of white parts in each of the plurality of image regions to the area of that image region obtained by the number of corresponding pixels;
    an in-plane uniformity computing device (13) that is configured to obtain in-plane uniformity of the voids based on the ratios of the voids, said in-plane uniformity referring to variation in the ratio of voids among the plurality of image regions; and
    a degree-of-dispersion quantifying device (16) that is configured to quantify the degree of dispersion of the particles based on the in-plane uniformity.

2. A degree-of-dispersion inspecting apparatus (1) for inspecting a degree of dispersion of particles of an electricity storage material in an electricity storage device, comprising:

    an imaging device (2) that is configured to image a portion of the electricity storage device in which the particles of the electricity storage material are present, and obtain image data;
    a binarizing device (3) that is configured to binarize the image data by dividing pixels of the image data into black and white to produce binarized image data;
    a void size equivalent value computing device (14) that is configured to obtain values equivalent to sizes of voids between the particles in the binarized image data, said values equivalent to the sizes of the voids including the lengths or the areas of the voids obtained by the number of white pixels from the binarized image data;
a void size uniformity computing device (15) that is configured to obtain void size uniformity of the voids based on the values equivalent to the sizes of the voids, said void size uniformity referring to variation in size among the voids in the binarized image data; and
a degree-of-dispersion quantifying device (16) that is configured to quantify the degree of dispersion of the particles based on the void size uniformity.

3. The degree-of-dispersion inspecting apparatus (1) according to claim 2, further comprising:

an image dividing device (11) that is configured to divide the binarized image data into a plurality of image regions;
a void ratio computing device (12) that is configured to obtain a ratio of voids between the particles in each of the plurality of image regions, said ratio of voids being the ratio of the area of white parts in each of the plurality of image regions to the area of that image region obtained by the number of corresponding pixels; and
an in-plane uniformity computing device (13) that is configured to obtain in-plane uniformity of the voids based on the ratios of the voids, said in-plane uniformity referring to variation in the ratio of voids among the plurality of image regions,
wherein the degree-of-dispersion quantifying device (16) is configured to quantify the degree of dispersion of the particles based on the in-plane uniformity and the void size uniformity.

4. The degree-of-dispersion inspecting apparatus (1) according to claim 2 or 3, wherein,
the imaging device (2) is configured to obtain the image data by scanning in a prescribed direction, and
the void size equivalent value computing device (14) is configured to obtain the lengths of the voids between the particles in the binarized image data as the values equivalent to the sizes of the voids.

5. The degree-of-dispersion inspecting apparatus (1) according to claim 4, wherein,
the imaging device (2) is configured to obtain the image data by scanning in one direction.

6. The degree-of-dispersion inspecting apparatus (1) according to claim 4, wherein,
the imaging device (2) is configured to obtain the image data by scanning in a first direction and in a second direction perpendicular to the first direction.

7. The degree-of-dispersion inspecting apparatus (1) according to any one of claims 1 to 6, further comprising:

a storage device (18) in which a correlation between the quantified degree of dispersion of the particles and performance of the electricity storage device is prestored; and
a performance evaluating device (17) that is configured to evaluate, based on the correlation, the performance of the electricity storage device from the quantified degree of dispersion of the particles obtained by the degree-of-dispersion quantifying device (16).

8. The degree-of-dispersion inspecting apparatus (1) according to any one of claims 1 to 7, wherein
the particles of the electricity storage material are particles of an active material, and
the imaging device (2) is a scanning electron microscope.

**Patentansprüche**

1. Dispersionsgrad-Untersuchungsvorrichtung (1) zur Untersuchung eines Dispersionsgrads von Partikeln eines Elektrizitätsspeichermaterials in einer Elektrizitätsspeichereinrichtung, mit:

einer Abbildungseinrichtung (2), die so konfiguriert ist, dass sie einen Abschnitt der Elektrizitätsspeichereinrichtung abbildet, in dem die Partikel des Elektrizitätsspeichermaterials vorhanden sind, und Bilddaten erhält;
einer Binarisierungseinrichtung (3), die so konfiguriert ist, dass sie die Bilddaten binarisiert, indem sie Pixel der Bilddaten in schwarz und weiß unterteilt, um binarisierte Bilddaten zu erzeugen;
einer Bildteilungseinrichtung (11), die so konfiguriert ist, dass sie die binarisierten Bilddaten in eine Vielzahl von Bildbereichen unterteilt;
einer Hohlraumanteil-Berechnungseinrichtung (12), die so konfiguriert ist, dass sie einen Anteil von Hohlräumen zwischen den Partikeln in jedem der Vielzahl von Bildbereichen erhält, wobei der Anteil von Hohlräumen der Anteil der Fläche von weißen Teilen in jedem der Vielzahl von Bildbereichen zu der Fläche dieses Bildbereichs ist, die durch die Anzahl an entsprechenden Pixeln erhalten wird;
einer Berechnungseinrichtung für Gleichförmigkeit innerhalb der Ebene (13), die so konfiguriert ist, dass sie beruhend auf den Anteilen der Hohlräume eine Gleichförmigkeit der Hohlräume innerhalb der Ebene erhält, wobei sich die Gleichförmigkeit innerhalb der Ebene auf eine Streuung des Anteils von Hohlräumen unter der Vielzahl von Bildbereichen bezieht; und
einer Dispersionsgrad-Quantifizierungseinrichtung (16), die so konfiguriert ist, dass sie beruhend auf der Gleichförmigkeit innerhalb der Ebene den Dispersionsgrad der Partikel quantifiziert.

2. Dispersionsgrad-Untersuchungsvorrichtung (1) zur Untersuchung eines Dispersionsgrads von Partikeln in einem Elektrizitätsspeichermaterial in einer Elektrizitätsspeichereinrichtung, mit:

einer Abbildungseinrichtung (2), die so konfiguriert ist, dass sie einen Abschnitt der Elektrizitätsspeichereinrichtung abbildet, in dem die Partikel des Elektrizitätsspeichermaterials vorhanden sind, und Bilddaten erhält;
einer Binarisierungseinrichtung (3), die so konfiguriert ist, dass sie die Bilddaten binarisiert, indem sie Pixel der Bilddaten in schwarz und weiß unterteilt, um binarisierte Bilddaten zu erzeugen;
einer Hohlraumgrößenäquivalentwert-Berechnungseinrichtung (14), die so konfiguriert ist, dass sie Werte erhält, die zu Größen von Hohlräumen zwischen den Partikeln in den binarisierten Bilddaten äquivalent sind, wobei die Werte, die zu den Größen der Hohlräume äquivalent sind, die Längen oder die Flächen der Hohlräume einschließen, die aus den binarisierten Bilddaten durch die Anzahl an weißen Pixeln erhalten werden;
einer Hohlraumgrößengleichförmigkeit-Berechnungseinrichtung (15), die so konfiguriert ist, dass sie beruhend auf den Werten, die zu den Größen der Hohlräume äquivalent sind, eine Hohlraumgrößengleichförmigkeit der Hohlräume erhält, wobei sich die Hohlraumgrößengleichförmigkeit auf eine Schwankung der Größe unter den Hohlräumen in den binarisierten Bilddaten bezieht; und
einer Dispersionsgrad-Quantifizierungseinrichtung (16), die so konfiguriert ist, dass sie beruhend auf der Hohlraumgrößengleichförmigkeit den Dispersionsgrad der Partikel quantifiziert.

3. Dispersionsgrad-Untersuchungsvorrichtung (1) nach Anspruch 2, mit außerdem:

einer Bildteilungseinrichtung (11), die so konfiguriert ist, dass sie die binarisierten Bilddaten in eine Vielzahl von Bildbereichen unterteilt;
einer Hohlraumanteil-Berechnungsvorrichtung (12), die so konfiguriert ist, dass sie einen Anteil von Hohlräumen zwischen den Partikeln in jeder der Vielzahl von Bildbereichen erhält, wobei der Anteil von Hohlräumen der Anteil der Fläche von weißen Teilen in jedem der Vielzahl von Bildbereichen zu der Fläche dieses Bildbereichs ist, die durch die Anzahl an entsprechenden Pixeln erhalten wird; und
einer Berechnungseinrichtung für Gleichförmigkeit innerhalb der Ebene (13), die so konfiguriert ist, dass sie beruhend auf den Anteilen der Hohlräume eine Gleichförmigkeit der Hohlräume innerhalb der Ebene erhält, wobei sich die Gleichförmigkeit innerhalb der Ebene auf eine Streuung des Anteils von Hohlräumen unter der Vielzahl von Bildbereichen bezieht,
wobei die Dispersionsgrad-Quantifizierungseinrichtung (16) so konfiguriert ist, dass sie den Dispersionsgrad der Partikel beruhend auf der Gleichförmigkeit innerhalb der Ebene und der Hohlraumgrößengleichförmigkeit quantifiziert.

4. Dispersionsgrad-Untersuchungsvorrichtung (1) nach Anspruch 2 oder 3, wobei
die Abbildungseinrichtung (2) so konfiguriert ist, dass sie die Bilddaten durch Scannen in einer vorgeschriebenen Richtung erhält, und
die Hohlraumgrößenäquivalenzwert-Berechnungseinrichtung (14) so konfiguriert ist, dass sie als die Werte, die zu den Größen der Hohlräume äquivalent sind, die Längen der Hohlräume zwischen den Partikeln in den binarisierten Bilddaten erhält.

5. Dispersionsgrad-Untersuchungsvorrichtung (1) nach Anspruch 4, wobei
die Abbildungseinrichtung (2) so konfiguriert ist, dass sie die Bilddaten durch Scannen in nur einer Richtung erhält.

6. Dispersionsgrad-Untersuchungsvorrichtung (1) nach Anspruch 4, wobei
die Abbildungseinrichtung (2) so konfiguriert ist, dass sie die Bilddaten durch Scannen in einer ersten Richtung und in einer zweiten Richtung senkrecht zur ersten Richtung erhält.

7. Dispersionsgrad-Untersuchungsvorrichtung (1) nach einem der Ansprüche 1 bis 6, mit zudem:

einer Speichereinrichtung (18), in der eine Korrelation zwischen dem quantifizierten Dispersionsgrad der Partikel und dem Leistungsvermögen der Elektrizitätsspeichereinrichtung vorgespeichert ist; und
einer Leistungsbeurteilungseinrichtung (17), die so konfiguriert ist, dass sie anhand des quantifizierten Dispersionsgrads der Partikel, der durch die Dispersionsgrad-Quantifizierungseinrichtung (16) erhalten wird, beruhend auf der Korrelation das Leistungsvermögen der Elektrizitätsspeichereinrichtung beurteilt.

**8.** Dispersionsgrad-Untersuchungsvorrichtung (1) nach einem der Ansprüche 1 bis 7, wobei die Partikel des Elektrizitätsspeichermaterials Partikel eines aktiven Materials sind und die Abbildungseinrichtung (2) ein Rasterelektronenmikroskop ist.

**Revendications**

**1.** Appareil d'inspection de degré de dispersion (1) pour inspecter un degré de dispersion des particules d'un matériau de stockage d'électricité dans un dispositif de stockage d'électricité, comprenant :

un dispositif d'imagerie (2) qui est configuré pour former une image d'une portion du dispositif de stockage d'électricité dans laquelle les particules du matériau de stockage d'électricité sont présentes, et obtenir des données d'image ;
un dispositif de binarisation (3) qui est configuré pour binariser les données d'image en divisant les pixels des données d'image en noir et blanc pour produire des données d'image binarisées ;
un dispositif de division d'image (11) qui est configuré pour diviser les données d'image binarisées en une pluralité de régions d'image ;
un dispositif de calcul de rapport des vides (12) qui est configuré pour obtenir un rapport des vides entre les particules dans chacune de la pluralité de régions d'image, où ledit rapport des vides est le rapport de la superficie des parties blanches dans chacune de la pluralité de régions d'image sur la superficie de cette région d'image obtenue par le nombre de pixels correspondants ;
un dispositif de calcul de l'uniformité dans le plan (13) qui est configuré pour obtenir l'uniformité dans le plan des vides sur la base des rapports des vides, où ladite uniformité dans le plan fait référence à la variation du rapport des vides parmi la pluralité de régions d'image ; et
un dispositif de quantification de degré de dispersion (16) qui est configuré pour quantifier le degré de dispersion des particules sur la base de l'uniformité dans le plan.

**2.** Appareil d'inspection de degré de dispersion (1) pour inspecter un degré de dispersion des particules d'un matériau de stockage d'électricité dans un dispositif de stockage d'électricité, comprenant :

un dispositif d'imagerie (2) qui est configuré pour former une image d'une portion du dispositif de stockage d'électricité dans laquelle les particules du matériau de stockage d'électricité sont présentes, et obtenir des données d'image ;
un dispositif de binarisation (3) qui est configuré pour binariser les données d'image en divisant les pixels des données d'image en noir et blanc pour produire des données d'image binarisées ;
un dispositif de calcul de valeurs équivalentes de taille des vides (14) qui est configuré pour obtenir des valeurs équivalentes aux tailles des vides entre les particules dans les données d'image binarisées, où lesdites valeurs équivalentes aux tailles des vides comportent les longueurs ou les superficies des vides obtenues par le nombre de pixels blancs provenant des données d'image binarisées ;
un dispositif de calcul de l'uniformité de la taille des vides (15) qui est configuré pour obtenir l'uniformité de la taille des vides des vides sur la base des valeurs équivalentes aux tailles des vides, où ladite uniformité de la taille des vides fait référence à la variation de la taille parmi les vides dans les données d'image binarisées ; et
un dispositif de quantification de degré de dispersion (16) qui est configuré pour quantifier le degré de dispersion des particules sur la base de l'uniformité de la taille des vides.

**3.** Appareil d'inspection de degré de dispersion (1) selon la revendication 2, comprenant en outre :

un dispositif de division d'image (11) qui est configuré pour diviser les données d'image binarisées en une pluralité de régions d'image ;
un dispositif de calcul de rapport des vides (12) qui est configuré pour obtenir un rapport des vides entre les particules dans chacune de la pluralité de régions d'image, où ledit rapport des vides est le rapport de la superficie des parties blanches dans chacune de la pluralité de régions d'image sur la superficie de cette région d'image obtenue par le nombre de pixels correspondants ; et
un dispositif de calcul de l'uniformité dans le plan (13) qui est configuré pour obtenir l'uniformité dans le plan des vides sur la base des rapports des vides, où ladite uniformité dans le plan fait référence à la variation du rapport des vides parmi la pluralité de régions d'image,
dans lequel le dispositif de quantification de degré de dispersion (16) est configuré pour quantifier le degré de dispersion des particules sur la base de l'uniformité dans le plan et de l'uniformité de la taille des vides.

**4.** Appareil d'inspection de degré de dispersion (1) selon la revendication 2 ou 3, dans lequel,
le dispositif d'imagerie (2) est configuré pour obtenir les données d'image par balayage dans une direction prescrite, et
le dispositif de calcul de valeurs équivalentes de taille des vides (14) est configuré pour obtenir les longueurs des vides entre les particules dans les données d'image binarisées comme valeurs équivalentes aux tailles des vides.

**5.** Appareil d'inspection de degré de dispersion (1) selon la revendication 4, dans lequel,
le dispositif d'imagerie (2) est configuré pour obtenir les données d'image par balayage dans une direction.

**6.** Appareil d'inspection de degré de dispersion (1) selon la revendication 4, dans lequel,
le dispositif d'imagerie (2) est configuré pour obtenir les données d'image par balayage dans une première direction et dans une seconde direction perpendiculaire à la première direction.

**7.** Appareil d'inspection de degré de dispersion (1) selon l'une quelconque des revendications 1 à 6, comprenant en outre :

un dispositif de stockage (18) dans lequel une corrélation entre le degré quantifié de dispersion des particules et la performance du dispositif de stockage d'électricité est pré-stockée ; et
un dispositif d'évaluation de performance (17) qui est configuré pour évaluer, sur la base de la corrélation, la performance du dispositif de stockage d'électricité provenant du degré quantifié de dispersion des particules obtenu par le dispositif de quantification de degré de dispersion (16).

**8.** Appareil d'inspection de degré de dispersion (1) selon l'une quelconque des revendications 1 à 7, dans lequel
les particules du matériau de stockage d'électricité sont des particules d'une matière active, et
le dispositif d'imagerie (2) est un microscope électronique à balayage.

# FIG.1

IMAGING DEVICE ⟋2

BINARIZING DEVICE ⟋3

IMAGE DIVIDING DEVICE ⟋11

VOID RATIO
COMPUTING DEVICE ⟋12

IN-PLANE UNIFORMITY
COMPUTING DEVICE ⟋13

VOID SIZE
EQUIVALENT VALUE
COMPUTING DEVICE ⟋14

VOID SIZE UNIFORMITY
COMPUTING DEVICE ⟋15

DEGREE-OF-DISPERSION
QUANTIFYING DEVICE ⟋16

BATTERY PERFORMANCE
EVALUATING DEVICE ⟋17

STORAGE DEVICE ⟋18

# FIG.2

```
              ( START )
                  │
                  ▼
      ┌─────────────────────────┐
S1 ─  │  OBTAIN IMAGE DATA OF    │
      │ COATING FILM OF ELECTRICITY │
      │    STORAGE MATERIAL      │
      └─────────────────────────┘
                  │
                  ▼
      ┌─────────────────────────┐
S2 ─  │   BINARIZE IMAGE DATA    │
      └─────────────────────────┘
                  │
                  ▼
      ┌─────────────────────────┐
S3 ─  │ DIVIDE BINARIZED IMAGE DATA │
      └─────────────────────────┘
                  │
                  ▼
      ┌─────────────────────────┐
S4 ─  │   COMPUTE AREA OF VOIDS  │
      └─────────────────────────┘
                  │
                  ▼
      ┌─────────────────────────┐
S5 ─  │ COMPUTE IN-PLANE UNIFORMITY │
      └─────────────────────────┘
                  │
                  ▼
      ┌─────────────────────────┐
S6 ─  │  COMPUTE LENGTHS OF VOIDS │
      └─────────────────────────┘
                  │
                  ▼
      ┌─────────────────────────┐
S7 ─  │ COMPUTE VOID SIZE UNIFORMITY │
      └─────────────────────────┘
                  │
                  ▼
      ┌─────────────────────────┐
      │ QUANTIFY DEGREE OF DISPERSION │
S8 ─  │ BASED ON IN-PLANE UNIFORMITY │
      │  AND VOID SIZE UNIFORMITY │
      └─────────────────────────┘
                  │
                  ▼
      ┌─────────────────────────┐
S9 ─  │ EVALUATE PERFORMANCE OF  │
      │    SECONDARY BATTERY     │
      └─────────────────────────┘
                  │
                  ▼
              (  END  )
```

# FIG.3

# FIG.4

PP

# FIG.5

A1   A2   A3   A4   PP

A5   A6   A7   A8

# FIG.6

→ S   PP

# FIG.7

FREQUENCY n

0

VOID LENGTH y

# FIG.8

CAPACITY
DECREASE RATE

0

DEGREE OF DISPERSION
OF PARTICLES $\gamma$
(IN-PLANE UNIFORMITY $\alpha$ ×
VOID SIZE UNIFORMITY $\beta$ )

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2925195 B
- JP H09257686 A
- JP 5271967 B
- JP 2013089491 A
- US 2008292965 A1

### Non-patent literature cited in the description

- **L. M. HAMMING et al.** Composites Science and Technology. Elsevier, vol. 69, 1880-1886